# EUROPEAN PATENT SPECIFICATION

(11) **EP 3 861 901 B1**
(45) Date of publication and mention of the grant of the patent: **17.01.2024**
(21) Application number: 21155761.6
(22) Date of filing: 08.02.2021
(51) Int. Cl.: C23C 4/11, C23C 4/134

(54) **CONTAINER FOR COOKING FOOD AND PROCESS FOR MAKING THE SAME**
BEHÄLTER ZUM KOCHEN VON NAHRUNGSMITTELN UND VERFAHREN ZUR HERSTELLUNG DAVON
RÉCIPIENT POUR LA CUISSON D'ALIMENTS ET SON PROCÉDÉ DE FABRICATION

(30) Priority: 07.02.2020 IT 202000002437
(43) Date of publication of application: 11.08.2021
(73) Proprietor: TVS S.p.A., 61033 Fermignano (PS) (IT)
(72) Inventor: BERTOZZINI, Giuseppe Alberto, 61033 Fermignano (IT)
(74) Representative: Feltrinelli, Secondo Andrea

(56) References cited:
- EP-A1- 0 509 860
- WO-A1-2007/123353
- WO-A1-2015/114581
- CN-U- 207 768 174
- DE-U1- 20 209 827
- KR-A- 20100 082 687

## Description

### TECHNICAL FIELD OF THE INVENTION

The present invention relates to a container for cooking food.

More in particular, the present invention relates to a container for cooking food especially suitable for cooking on electromagnetic induction sources.

Furthermore, the present invention relates to a process for making the aforementioned container for cooking food.

### TECHNICAL BACKGROUND

In the field of containers for cooking food, such as pots, pans, and the like, types of containers are known which particularly, but not exclusively, are suitable and indicated for cooking on modern electromagnetic induction plates.

Such types of containers normally comprise a bottom made of a first material, for example a ferromagnetic material or other material with similar properties.

Furthermore, such a container comprises a bowl made of a second material, for example a non-ferromagnetic material, attached to said bottom.

The coupling of such components - which may be obtained with different technologies - allows to obtain a good technical result in the use of the container with induction-type heat sources, since the bottom made of the first material is heated by the parasitic currents generated by the effect of the magnetic field generated by the induction source, and transfers the heat to the bowl; the latter then distributes the heat to the food in a gradual and uniform manner.

To limit the problem of deformations of the container caused by the difference between the thermal expansion coefficients of the first and the second material, it has been proposed to insert a third inner discoidal component made of the same metal material as the second outer component, or of similar material, so as to limit or completely cancel the curving effect of the bottom which, in the known type of containers, is precisely due to the association of materials having different thermal expansion coefficients.

Examples of these embodiments are illustrated in patents CH704097B1 and EP2706891B1, in the name of the same Applicant. A food cooking vessel is disclosed in WO 2015/114581.

However, the presence of different metal components inside the container leads to galvanic corrosion phenomena.

In particular, between the two metals, placed in contact with an electrolyte - in the particular case food which can be in aqueous solution and in the presence of salts, fats and sugars - a short-circuit current is generated, i.e. a stream of electrons which migrate from the least noble metal, i.e. the most electronegative metal, such as aluminium, to the most noble, i.e. the least electronegative metal, such as stainless steel.

This leads to an oxidation of the aluminium, which behaves like an anode, while stainless steel remains unchanged due to a protection phenomenon, of the same electrons coming from the aluminium.

The non-stick coating which is normally used inside containers for cooking food does not solve this problem, because these types of coatings are or can become porous, especially with the use of the container when cooking food.

To overcome such a problem, it is therefore necessary to isolate the two metals from contact with the electrolyte by means of a coating layer which can effectively seal the surfaces of the two components, in particular in the aluminium/stainless steel interface area.

### OBJECTS OF THE INVENTION

The technical task of the present invention is to improve the state of the art.

Within the scope of such a technical task, it is an object of the present invention to make a container for cooking food, of the type suitable for cooking on electromagnetic induction plates, which has a greater resistance to corrosion with respect to the known type of containers.

Such a task and such objects are achieved by a container for cooking food according to the appended claim 1.

The container according to the present invention, of the type usable on electromagnetic induction sources, comprises a first substantially concave element, made of a first material, provided with an upper surface intended to accommodate the food to be cooked, and a lower surface for resting the container, a second element, attached to the lower surface of the first element and at least partially included within the thickness of the same first element, as well as a third element, attached to the upper surface of the first element and at least partially included within the thickness of the same first element.

The third element is made of the aforementioned second material or of a third material suitable for contact with food.

A coating resistant to corrosion is provided on the upper surface of the container and especially in the interface area between the first element and the second element. According to another aspect of the present invention, a method is presented for making a container for cooking food, of the type usable on electromagnetic induction sources, according to claim 13.

The dependent claims refer to preferred and advantageous embodiments of the invention.

### BRIEF DESCRIPTION OF THE DRAWINGS

Further features and advantages will become more apparent from the detailed description of the invention, illustrated by way of non-limiting example, in the accompanying drawings, in which:
figure 1 shows a cross-section of the container according to the present invention, in an intermediate production step;
figure 2 shows a partial cross-section of the container of figure 1 in a further processing step; and
figure 3 shows a detail of the section of the container of figure 2.

### EMBODIMENTS OF THE INVENTION

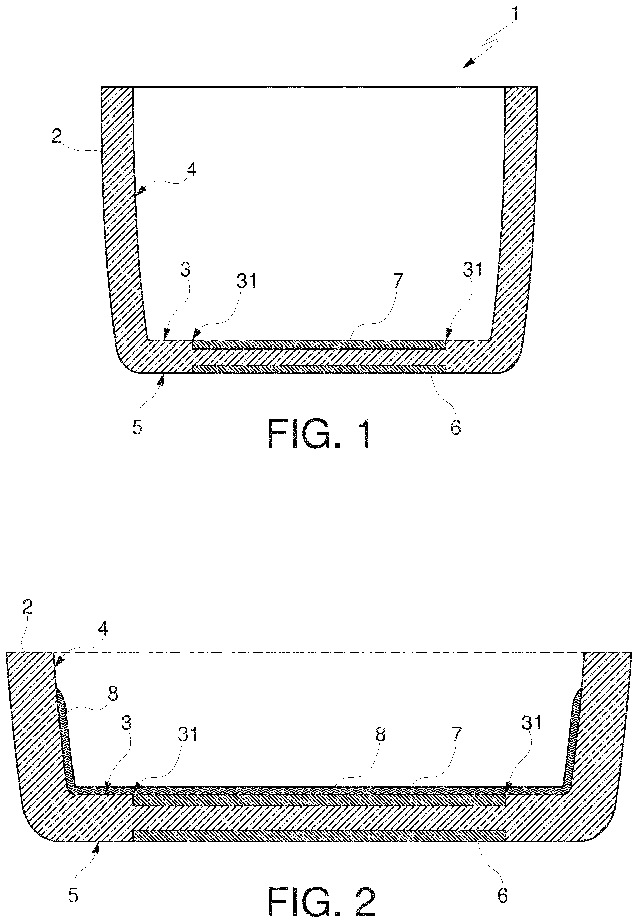

With particular reference to figure 1, a container for cooking food according to the invention is indicated as a whole with the reference number 1.

The dimensions and proportions of the container 1 illustrated in figure 1 are entirely indicative, for the sole purpose of illustrating the features of the invention.

The container 1 is of the type which can be used on electromagnetic induction sources, but can also be used on any other heat source, without any limitation.

The container 1 comprises a first substantially concave element 2 i.e. substantially bowl-shaped to contain the foods to be cooked.

The first element 2 has an upper surface 3 intended to accommodate the food to be cooked. The aforementioned upper surface 3 is normally a substantially flat part, which constitutes the bottom of the container 1, which also comprises a side wall defining the side surface 4 of the same container 1; the upper surface 3 and the side surface 4 constitute the inner surface of the container 1 in which the food is cooked.

The first element 2 further comprises a lower surface 5 for resting the container 1.

The first element 2 is made of a first material; the aforementioned first material with which the first element 2 is made is of the type such that it does not heat if positioned near an electromagnetic induction source.

In further detail, the first material of the first element 2 is of a non-ferromagnetic type.

In a preferred embodiment of the invention, the first material with which the first element 2 is made is aluminium, or aluminium alloy, or another metal material, or metal alloy, distinguishable for high thermal conductivity and good processability.

The container 1 further comprises a second element 6 which is attached to the lower surface 5 of the first element 2.

More in particular, the second element 6 is attached to the lower surface 5 of the first element 2 permanently, separable therefrom only by a mechanical action.

The second element 6 is attached to the lower surface 5 so as to be at least partially included within the thickness of the first element 2, or completely included within the thickness of the first element 2.

The second element 6 is made of a second material; this second material with which the second element 6 is made is of a type suitable for heating when immersed in the magnetic field generated by an electromagnetic induction source.

More specifically, the second material is of ferromagnetic type and can comprise a stainless steel, e.g. a steel of the AISI 430, or AISI 410 type.

More in general, ferromagnetic materials having certain requirements such as high magnetic susceptibility, and other known requirements, can be used.

According to the present invention, the container 1 also comprises a third element 7. The third element 7 is attached to the upper surface 3 of the first element 2.

More in particular, the third element 7 is permanently attached to the upper surface 3 of the first element 2, except for voluntary separation operations.

The third element 7 is attached to the upper surface 3 so as to be at least partially included within the thickness of the first element 2; the third element 7 can also be completely included within the thickness of the first element 2.

According to the latter version, the upper surface 3 of the first element 2 and the third element 7 define a smooth cooking surface, i.e. without substantial discontinuities, inside the container 1.

The third element 7 is made of a third material, or of the same second material with which the second element 6 is made.

In the case where the third element 7 is made of a third material other than the aforementioned second material, it should be noted that said third material is of a type suitable for contact with food.

More specifically, such a third material can be of the ferromagnetic type, and in particular it can be a stainless steel, for example the same stainless steel which constitutes the aforementioned second material, or another type of stainless steel; it is, however, a material suitable for use in the food field, i.e. having certain requirements such as high resistance to corrosion, and other known requirements.

It should also be noted that the second element 6 and the third element 7 may also have holes and notches, for example in order to improve electromagnetic performance and as illustrated, for example, in patent EP3119249B1, in the name of the same Applicant.

In any case, the third element 7 favours the maintenance of the initial shape of the container 1 with the upper surface 3 provided for that type of container, flat or curved as appropriate, even following repeated heating cycles.

Figure 1 shows the container 1 in an intermediate processing step, the container 1 has its final shape with the second element 6 and the third element 7 being attached to the first element 2; it can be seen that in the upper surface 3 there is an interface area 31 in which the first element 2 and the third element 7 are adjacent.

Figure 2 shows the container 1 in a further processing step, in which the inner surface of the container 1 is coated with a layer 8 of corrosion-resistant material which covers at least the upper surface 3 and, if envisaged, extends for at least a part of the side surface 4.

It is important to provide the layer 8 of corrosion-resistant material because a galvanic current is generated between the metals of the first element 2 and the third element 7, contacted with an electrolyte. In the particular case the electrolyte consists of food which that can be in aqueous solution and/or in the presence of salts, fats and sugars.

A flow of electrons is therefore generated which migrate from the least noble metal, i.e. the most electronegative one, such as the aluminium of the first element 2, to the most noble one, i.e. the least electronegative one, such as the stainless steel of the third element 7, causing a corrosion of the first element 2, especially in the interface area 31 with the third element 7.

It should also be noted that the presence of a non-stick coating, for example obtained with special PTFE-based paints (polytetrafluoroethylene) or similar materials and Sol-gel coatings, does not eliminate such a problem, as the aforementioned paints are or may become porous over time and allow the contact of the electrolyte with the metals of the first and third element 2, 7.

The layer 8 of corrosion-resistant material may comprise aluminium oxide (Al2O3), or alumina, which allows to electrically insulate the upper surface 3 and part of the side surface 4 of the container 1 and in particular the adjacent areas between the first element 2 and the third element 7, i.e. the interface area 31 between the material of the first element 2, which is generally aluminium, and the material of the third element 7, which is generally stainless steel.

The layer 8 of corrosion-resistant material manages to create a barrier against galvanic corrosion, i.e. against the flow of electrons which cause corrosion phenomena.

Since the aluminium oxide is relatively fragile and hard, in the interface area 31 between aluminium and stainless steel there may be movements due to the different thermal expansion of the metals involved.

To overcome these drawbacks, a small mass percentage of titanium, in the form of oxide (TiO2), can be added to the aluminium oxide, which tends to increase the elasticity of the coating once applied, so as to favour the elastic deformation, without breakage or cracks, of the corrosion-resistant layer 8.

According to a version of the present invention, the mass percentage of titanium oxide added to the aluminium oxide can vary between 1% and 5%, and in particular can be about 3%.

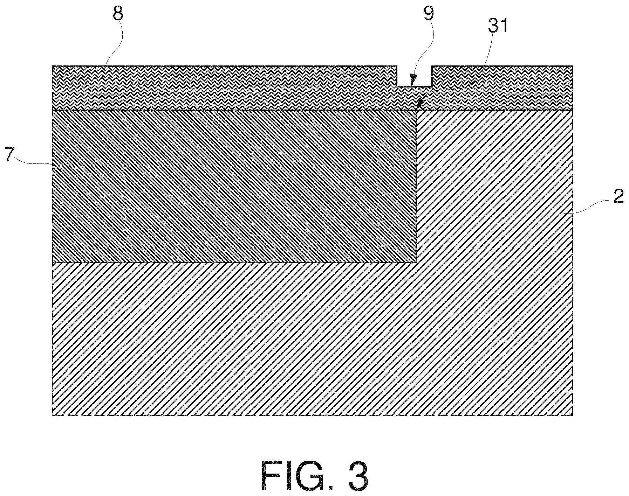

In another version of the present invention, illustrated in figure 3, the layer 8 of corrosion-resistant material, which is applied on the upper surface 3 of the container 1, has a variable thickness.

In particular, in the interface area 31 between the material of the first element 2 and the material of the third element 7, the thickness of the layer 8 of corrosion-resistant material must not be too high, to avoid breakages or cracks, while a higher thickness can be obtained in the other areas of the upper surface 3, to have good hardness and resistance performance. Figure 3 shows a magnification of the interface area 31 between the material of the first element 2 and the material of the third element 7 in which the layer 8 of corrosion-resistant material has a portion 9 of smaller thickness.

Thus, in the latter embodiment the corrosion-resistant material may comprise, predominantly or only, aluminium oxide without additions of other materials or additives. By way of non-limiting example, the thickness of the layer 8 of corrosion-resistant material is between 20 µm and 150 µm and according to a version of the present invention the thickness of the layer 8 of corrosion-resistant material is about 40 µm.

According to the present invention, the layer 8 of corrosion-resistant material is applied to the upper surface 3 of the container 1 via the technique named thermal plasma spray, i.e. plasma spray in the presence of a controlled atmosphere, for example with nitrogen, and at a speed higher than MACH.

The system for the application of the layer 8 of corrosion-resistant material comprises at least a plasma torch associated with drive members and control and supply means of the material to be deposited, of the gas to be transformed into plasma, of the gas for the controlled atmosphere and of the impact speed. (not depicted in the figures).

The drive members provide for the movement of the plasma torch, while the control and supply means manage the operation thereof according to the predetermined programs and provide the necessary power supply and gas mixture.

The plasma torch comprises a nozzle which internally defines a chamber, leading to an orifice which must face the container 1 to be treated, in particular the upper surface 3 of the container 1 must face the working area of the plasma torch.

The chamber is supplied with a gas or a mixture of gases, comprising for example argon, hydrogen, helium and nitrogen in appropriate percentages, such a mixture of gases being introduced into the chamber with appropriate pressure.

The nozzle also defines one or more ducts along which the corrosion-resistant material is supplied, for example in the form of powder with grains of appropriate size, to make the layer 8 of corrosion-resistant material.

The gas (or mixture of gases) is brought to the plasma state and can then melt the material in the form of powders and spray it at a supersonic speed on the inner surface of the container 1.

As mentioned above, the corrosion-resistant material may comprise for example: aluminium oxide (Al2O3), or aluminium oxide (Al2O3) with small additions of titanium oxide (TiO2), however other materials, or mixtures of materials, of suitable corrosion-resistant features and suitable for contact with food may also be used.

To apply the layer 8 of corrosion-resistant material, the drive members of the plasma torch can automatically move the aforesaid torch, for example the drive members cam comprise a Cartesian robot or an anthropomorphic robot.

The plasma torch is positioned in front of the inner surface of the container 1 on which the layer 8 of corrosion-resistant material is to be applied and is moved so as to cover the area envisaged for the layer 8; the container 1 is mounted on a respective support, not depicted in the figures.

Numerous identical or even different containers 1 can also be mounted on such a support, if this allows to reduce processing times and costs.

It should be noted that by varying the translation speed of the torch with respect to the inner surface of the container 1, the thickness of the layer 8 of corrosion-resistant material can be varied.

In particular, to obtain the aforementioned portion 9 of smaller thickness, the torch drive members can make the torch pass at a higher speed when the torch is on the interface area 31, so as to decrease the amount of powder of corrosion-resistant material applied, keeping the powder flow rate of the plasma torch constant.

According to another version of the present invention, the portion 9 of smaller thickness can be obtained by a subsequent processing, for example a mechanical machining with chip removal or an electro-discharge processing.

The following illustrates the process for making the container 1 for cooking food described above.

Initially, the process includes a step of preparing an assembly comprising the first element 2, the second element 6 positioned externally in the lower surface 5 of the first element 2 and the third element 7 positioned internally in the upper surface 3 of the first element 2. The first element 2 can be flat and then subsequently formed with the substantially bowl shape, or it can already be formed, i.e. it can already have its substantially bowl shape derived from a previous processing (which is not further described herein). Subsequently, the assembly, thus made, is heated to a certain temperature for a certain time, using heating means known in the art, which are not further described herein. Such a heating step of the assembly is carried out at a temperature between about 200°C and about 550°C, and preferably between 330°C and 500°C.

Following the heating step, the assembly is mounted on a press.

In further detail, the assembly is mounted in a matrix of a press adapted to carry out processing with the impact bonding technique.

Pressing with the impact bonding technique includes beating the first, second and third elements, respectively 2, 6 and 7, by means of a press which generates a vigorous impact and, exploiting the sliding of the element in more deformable material, in the specific case the first element 2, on the other two harder elements 6 and 7, allows a perfect union of the aforementioned elements 2, 6 and 7.

The assembly of the three elements 2, 6 and 7, joined together with the impact bonding technique, therefore presents itself as a single piece with the final shape of the container 1; it should also be noted that the three elements 2, 6 and 7 could also be joined with different techniques.

Then the container 1 comprising the assembly of the three elements 2, 6 and 7 is subjected to the step of applying the layer 8 of corrosion-resistant material, after having been washed to remove oily impurities and solid residues and subjected to a sandblasting step to have a surface roughness suitable for receiving the layer 8 of corrosion-resistant material. The roughness is a function of the powder grain size of the corrosion-resistant material to be deposited, it can range from 1 Ra to 4.5 Ra, in particular in the aforementioned invention a roughness of 2.5 Ra is used.

A system for applying the layer 8 of corrosion-resistant material is provided comprising at least a plasma torch associated with drive members and control and supply means.

A support for one or more containers 1 is provided, said one or more containers 1 being mounted on said support so as to present the upper surface 3 facing the working region of the plasma torch.

The plasma torch delivers the corrosion-resistant material and is moved with respect to the upper surface 3 and at least a part of the side surface 4 of the containers 1 through the respective drive members, while the control and power supply means manage the operation thereof according to the predetermined programs and provide the necessary power supply and gas mixture.

As mentioned, the delivered corrosion-resistant material can comprise aluminium oxide (Al2O3), or aluminium oxide (Al2O3) with a small percentage of titanium oxide (TiO2), the mass percentage of titanium oxide added to the aluminium oxide being between 1% and 5%, and in particular being about 3%.

The plasma torch delivers the corrosion-resistant material with a constant flow rate, therefore the thickness of the layer 8 of corrosion-resistant material depends on the speed with which the torch is moved with respect to the upper surface 3 and at least a part of the side surface 4 of the containers 1.

In order to obtain the portion 9 of smaller thickness, the process according to the present invention includes that the plasma torch is handled with a higher speed passage near the interface area 31.

According to another version of the process, the area 9 of smaller thickness is obtained by a subsequent step of removing non-stick material until the desired thickness is obtained. The step of removing non-stick material can comprise a mechanical machining with chip removal or an electro-discharge processing.

The container 1, thus treated, can then be introduced into a standard processing cycle of the containers for cooking food.

Therefore, in a version of the present invention the process comprises, in addition to the steps described above, or even only to some of them, at least one mechanical finishing processing step.

In another version, the method comprises, in addition to the steps described above, or even only some of them, a step of welding a *goujon*-like element, for example for the application of handles and the like.

In another version, the process comprises, in addition to the steps described above, or even only some of them, at least one step of washing the product.

In another embodiment the process comprises, in addition to the steps described above, or even only some of them, at least one chemical or physical surface treatment step, such as pickling, sandblasting, and the like.

In another version, the process comprises, in addition to the steps described above, or even only some of them, at least one step of painting the product.

In yet another version, the process comprises, in addition to the steps described above, or even only some of them, at least one step of assembling other components.

It has thus been seen how the invention fully achieves the intended purposes.

The present invention thereby conceived is susceptible to numerous modifications and variations, all of which falling within the protective scope of the appended claims.

## Claims

1. Container (1) for cooking food, of the type usable on electromagnetic induction sources, comprising a first substantially concave element (2), made of a first material, e.g. aluminium, or aluminium alloy, or another metal material, or metal alloy, distinguishable for high thermal conductivity and good processability, and comprising an upper surface (3) intended to accommodate the food to be cooked, a side wall defining the side surface (4) of the same container (1), said upper surface (3) and said side surface (4) constituting the inner surface of said container (1), a lower surface (5) for resting said container (1) on an electromagnetic induction source or other heat sources,
a second element (6) attached to said lower surface (5) and at least partially included within the thickness of said first element (2), said second element (6) being made of a second material suitable for heating when immersed in the magnetic field generated by an electromagnetic induction source,
a third element (7) attached to said upper surface (3) and at least partially included within the thickness of said first element (2), said third element (7) being made of said second material or of a third material, said container (1) presenting an interface area (31), arranged on the upper surface (3), wherein said first element (2) and said third element (7) are adjacent,
**characterized in that**
at least said upper surface (3) comprises a layer (8) of corrosion-resistant material, wherein said layer (8) of corrosion-resistant material is obtained by applying said corrosion-resistant material on the upper surface (3) of the container (1) with a plasma torch via the technique named thermal plasma spray, i.e. plasma spray in the presence of a controlled atmosphere.

2. Container according to claim 1, wherein said corrosion-resistant material comprises aluminium oxide or alumina (Al2O3).

3. Container according to claim 1, wherein said corrosion-resistant material comprises aluminium oxide or alumina (Al2O3) with a small mass percentage of titanium oxide (TiO2).

4. Container according to the preceding claim, wherein the mass percentage of titanium oxide (TiO2) added to the aluminium oxide or alumina (Al2O3) may range between 1% and 5%, and in particular it can be about 3%.

5. Container according to one of the preceding claims, wherein said layer (8) of corrosion-resistant material extends for at least a part of the side surface (4).

6. Container according to one of the preceding claims, wherein said layer (8) of corrosion-resistant material comprises a portion (9) of smaller thickness located near the interface zone (31) between said first element (2) and said third element (7).

7. Container according to the previous claim, when depending on claim 5, wherein said portion (9) of smaller thickness is obtained by moving said plasma torch with a higher speed passage near the interface zone (31).

8. Container according to claim 6, wherein said portion (9) of smaller thickness is obtained by removing said non-stick material until the desired thickness is obtained, said removal comprising a mechanical machining with chip removal or an electro-discharge processing.

9. Container according to one of the preceding claims, wherein said thickness of the layer (8) of corrosion-resistant material is comprised between 20 µm and 150 µm.

10. Container according to one of the preceding claims, wherein said second material and/or said third material are of the ferromagnetic type, e.g. a stainless steel of the AISI 430, or AISI 410 type.

11. Container according to one of the preceding claims, wherein said second element (6) and said third element (7) comprise respective openings and/or notches.

12. Process for making a container (1) for cooking food, of the type usable on electromagnetic induction sources, **characterized in that** it includes the steps of:
providing a first element (2) made of a first material, comprising an upper surface (3) intended to accommodate the food to be cooked, and a lower surface (5) for resting the container (1), said first element (2) being already formed with a substantially bowl-like shape, or being subsequently formed with the substantially bowl-like shape;
providing a second element (6), made of a second material suitable for heating when immersed in the magnetic field generated by an electromagnetic induction source;
providing a third element (7), made of said second material or of a third material;
attaching said second element (6) to said lower surface (5), so as to include it at least partially within the thickness of said first element (2);
attaching said third element (7) to said upper surface (3) of the container (1), so as to include it at least partially within the thickness of said first element (2), said container (1) presenting an interface area (31), arranged on the upper surface (3), wherein said first element (2) and said third element (7) are adjacent;
**characterized in that** it comprises:
applying to said upper surface (3) of the container (1) a layer (8) of corrosion-resistant material with a plasma torch via the technique named thermal plasma spray, i.e. plasma spray in the presence of a controlled atmosphere.

13. Process according to the preceding claim, wherein said step of applying a layer (8) of corrosion-resistant material comprises applying aluminium oxide or alumina (Al2O3).

14. Process according to claim 12, wherein said step of applying a layer (8) of corrosion-resistant material comprises applying aluminium oxide or alumina (Al2O3) with a small mass percentage of titanium oxide (TiO2).

15. Process according to one of claims 12-14, wherein said step of applying a layer (8) of corrosion-resistant material comprises applying to said upper surface (3) of the container (1) and to at least a part of the side surface (4).

16. Process according to one of claims 12-15, wherein said step of applying a layer (8) of corrosion-resistant material comprises moving said plasma torch at a higher speed when the torch is on the interface area (31), so as to decrease the amount of corrosion-resistant material powder applied, keeping the powder flow rate of the plasma torch constant and thus making a portion (9) of smaller thickness in said layer (8).

17. Process according to one of claims 12-15, comprising removing said non-stick material, until the desired thickness is obtained, near said interface area (31), thus making a portion (9) of smaller thickness in said layer (8), said removal comprising a mechanical machining with chip removal or an electro-discharge processing.

18. Process according to one of claims 12-17, wherein said first element (2), said second element (6) and said third element (7) are joined together with the impact bonding technique.

19. Process according to one of claims 12-18, wherein said step of applying a layer (8) of corrosion-resistant material is preceded by a washing step of the container (1) to remove oily impurities and solid residues and it is subjected to a sandblasting step to have a surface roughness suitable for receiving said layer (8) of corrosion-resistant material.

20. Process according to the preceding claim, wherein said sandblasting step achieves a surface roughness between 1 Ra and 4.5 Ra.

## Patentansprüche

1. Behälter (1) zum Kochen von Lebensmitteln des auf elektromagnetischen Induktionsquellen verwendbaren Typs, umfassend ein erstes im Wesentlichen konkaves Element (2), hergestellt aus einem ersten Material, z.B. Aluminium oder einer Aluminiumlegierung oder einem anderen metallischen Material oder einer Metalllegierung, das sich durch eine hohe Wärmeleitfähigkeit und eine gute Verarbeitbarkeit auszeichnet, und umfassend eine obere Oberfläche (3), die zur Aufnahme des zu kochenden Lebensmittels bestimmt ist, eine Seitenwand, die die seitliche Oberfläche (4) desselben Behälters (1) definiert, wobei die besagte obere Oberfläche (3) und die besagte seitliche Oberfläche (4) die innere Oberfläche des besagten Behälters (1) bilden, und eine untere Oberfläche (5) zum Abstellen des besagten Behälters (1) auf einer elektromagnetischen Induktionsquelle oder anderen Wärmequellen,
ein zweites Element (6), das an der besagten unteren Oberfläche (5) befestigt ist und mindestens teilweise in der Dicke des besagten ersten Elements (2) enthalten ist, wobei das besagte zweite Element (6) aus einem zweiten Material hergestellt ist, das zur Erwärmung geeignet ist, wenn es in das von einer elektromagnetischen Induktionsquelle erzeugte Magnetfeld eingetaucht wird,
ein drittes Element (7), das an der besagten oberen Oberfläche (3) befestigt ist und mindestens teilweise in der Dicke des besagten ersten Elements (2) enthalten ist, wobei das besagte dritte Element (7) aus dem besagten zweiten Material oder aus einem dritten Material hergestellt ist, wobei der besagte Behälter (1) einen Grenzflächenbereich (31) aufweist, der an der oberen Oberfläche (3) angeordnet ist, worin das besagte erste Element (2) und das besagte dritte Element (7) aneinander angrenzen,
**dadurch gekennzeichnet, dass**
mindestens die besagte obere Oberfläche (3) eine Schicht (8) aus korrosionsbeständigem Material umfasst, worin die besagte Schicht (8) aus korrosionsbeständigem Material durch Aufbringen des besagten korrosionsbeständigen Materials auf die obere Oberfläche (3) des Behälters (1) mit einem Plasmabrenner mittels der als thermisches Plasmaspritzen bezeichneten Technik, d.h. Plasmaspritzen in Präsenz einer kontrollierten Atmosphäre, erhalten wird.

2. Behälter nach Anspruch 1, worin das besagte korrosionsbeständige Material Aluminiumoxid oder Alumina (Al2O3) umfasst.

3. Behälter nach Anspruch 1, worin das besagte korrosionsbeständige Material Aluminiumoxid oder Alumina (Al2O3) mit einem geringen Massenanteil an Titanoxid (TiO2) umfasst.

4. Behälter nach dem vorhergehenden Anspruch, worin der Massenanteil an Titanoxid (TiO2), der dem Aluminiumoxid oder Alumina (Al2O3) zugesetzt wird, zwischen 1 % und 5 % liegen kann, und insbesondere etwa 3 % betragen kann.

5. Behälter nach einem der vorhergehenden Ansprüche, worin sich die besagte Schicht (8) aus korrosionsbeständigem Material über mindestens einen Teil der seitlichen Oberfläche (4) erstreckt.

6. Behälter nach einem der vorhergehenden Ansprüche, worin die besagte Schicht (8) aus korrosionsbeständigem Material einen Teil (9) mit geringerer Dicke umfasst, der sich nahe des Grenzflächenbereichs (31) zwischen dem besagten ersten Element (2) und dem besagten dritten Element (7) befindet.

7. Behälter nach dem vorhergehenden Anspruch, wenn abhängig von Anspruch 5, worin der besagte Abschnitt (9) mit geringerer Dicke erhalten wird, indem der besagte Plasmabrenner mit einem höheren Geschwindigkeitsdurchgang nahe des Grenzflächenbereichs (31) bewegt wird.

8. Behälter nach Anspruch 6, worin der besagte Abschnitt (9) mit geringerer Dicke erhalten wird, indem das besagte Antihaftmaterial entfernt wird, bis die gewünschte Dicke erreicht ist, wobei die besagte Entfernung eine mechanische Bearbeitung mit Spanabtrag oder eine funkenerosive Bearbeitung umfasst.

9. Behälter nach einem der vorhergehenden Ansprüche, worin die besagte Dicke der Schicht (8) aus korrosionsbeständigem Material zwischen 20 µm und 150 µm liegt.

10. Behälter nach einem der vorhergehenden Ansprüche, worin das besagte zweite Material und/oder das besagte dritte Material vom ferromagnetischen Typ, z.B. ein rostfreier Stahl des Typs AISI 430 oder AISI 410, sind.

11. Behälter nach einem der vorhergehenden Ansprüche, worin das besagte zweite Element (6) und das besagte dritte Element (7) jeweilige Öffnungen und/oder Kerben umfassen.

12. Verfahren zur Herstellung eines Behälters (1) zum Kochen von Lebensmitteln des auf elektromagnetischen Induktionsquellen verwendbaren Typs, **dadurch gekennzeichnet, dass** es die Schritte beinhaltet des:
Bereitstellens eines ersten Elements (2) aus einem ersten Material, umfassend eine obere Oberfläche (3), die zur Aufnahme des zu kochenden Lebensmittels bestimmt ist, und eine untere Oberfläche (5) zum Abstellen des Behälters (1), wobei das besagte erste Element (2) bereits mit einer im Wesentlichen schalenartigen Form ausgebildet ist oder anschließend mit der im Wesentlichen schalenartigen Form ausgebildet wird;
Bereitstellens eines zweiten Elements (6) aus einem zweiten Material, das zur Erwärmung geeignet ist, wenn es in das von einer elektromagnetischen Induktionsquelle erzeugte Magnetfeld eingetaucht wird;
Bereitstellens eines dritten Elements (7) aus dem besagten zweiten Material oder aus einem dritten Material;
Befestigens des besagten zweiten Elements (6) an der besagten unteren Oberfläche (5), um es mindestens teilweise in die Dicke des besagten ersten Elements (2) einzubeziehen;
Befestigens des besagten dritten Elements (7) an der besagten oberen Oberfläche (3) des Behälters (1), um es mindestens teilweise in die Dicke des besagten ersten Elements (2) einzubeziehen, wobei der besagte Behälter (1) einen Grenzflächenbereich (31) aufweist, der an der oberen Oberfläche (3) angeordnet ist, worin das besagte erste Element (2) und das besagte dritte Element (7) aneinander angrenzen;
**dadurch gekennzeichnet, dass** es umfasst:
das Aufbringen einer Schicht (8) aus korrosionsbeständigem Material auf die besagte obere Oberfläche (3) des Behälters (1) mit einem Plasmabrenner mittels der als thermisches Plasmaspritzen bezeichneten Technik, d.h. Plasmaspritzen in Präsenz einer kontrollierten Atmosphäre.

13. Verfahren nach dem vorhergehenden Anspruch, worin der besagte Schritt des Aufbringens einer Schicht (8) aus korrosionsbeständigem Material das Aufbringen von Aluminiumoxid oder Alumina (Al2O3) umfasst.

14. Verfahren nach Anspruch 12, worin der besagte Schritt des Aufbringens einer Schicht (8) aus korrosionsbeständigem Material das Aufbringen von Aluminiumoxid oder Alumina (Al2O3) mit einem geringen Massenanteil an Titanoxid (TiO2) umfasst.

15. Verfahren nach einem der Ansprüche 12-14, worin der besagte Schritt des Aufbringens einer Schicht (8) aus korrosionsbeständigem Material das Aufbringen auf die besagte obere Oberfläche (3) des Behälters (1) und auf mindestens einen Teil der seitlichen Oberfläche (4) umfasst.

16. Verfahren nach einem der Ansprüche 12-15, worin der besagte Schritt des Auftragens einer Schicht (8) aus korrosionsbeständigem Material das Bewegen des besagten Plasmabrenners mit einer höheren Geschwindigkeit umfasst, wenn sich der Brenner auf dem Grenzflächenbereich (31) befindet, um die Menge des aufgetragenen Pulvers aus korrosionsbeständigem Material zu verringern, wobei die Pulverflussrate des Plasmabrenners konstant gehalten wird und somit ein Abschnitt (9) mit geringerer Dicke in der besagten Schicht (8) hergestellt wird.

17. Verfahren nach einem der Ansprüche 12-15, umfassend die Entfernung des besagten Antihaftmaterials, bis die gewünschte Dicke nahe des besagten Grenzflächenbereichs (31) erreicht ist, wodurch ein Abschnitt (9) mit geringerer Dicke in der besagten Schicht (8) hergestellt wird, wobei die besagte Entfernung eine mechanische Bearbeitung mit Spanabtrag oder eine funkenerosive Bearbeitung umfasst.

18. Verfahren nach einem der Ansprüche 12-17, worin das besagte erste Element (2), das besagte zweite Element (6) und das besagte dritte Element (7) mit der Schlagpresstechnik miteinander verbunden werden.

19. Verfahren nach einem der Ansprüche 12-18, worin dem besagten Schritt des Aufbringens einer Schicht (8) aus korrosionsbeständigem Material ein Waschschritt des Behälters (1) vorausgeht, um ölige Verunreinigungen und feste Rückstände zu entfernen, und er einem Sandstrahlschritt unterzogen wird, um eine Oberflächenrauheit aufzuweisen, die zur Aufnahme der besagten Schicht (8) aus korrosionsbeständigem Material geeignet ist.

20. Verfahren nach dem vorhergehenden Anspruch, worin der besagte Sandstrahlschritt eine Oberflächenrauheit zwischen 1 Ra und 4,5 Ra erreicht.

## Revendications

1. Récipient (1) pour cuire des aliments, du type utilisable sur les sources d'induction électromagnétique, comprenant un premier élément sensiblement concave (2), constitué d'un premier matériau, par exemple de l'aluminium, ou un alliage d'aluminium, ou d'un autre matériau métallique, ou alliage métallique, se distinguant par la conductivité thermique élevée et la bonne aptitude à la mise en œuvre, et comprenant une surface supérieure (3) destinée à accueillir les aliments à cuire, une paroi latérale définissant la surface latérale (4) du même récipient (1), ladite surface supérieure (3) et ladite surface latérale (4) constituant la surface intérieure dudit récipient (1), une surface inférieure (5) pour reposer ledit récipient (1) sur une source d'induction électromagnétique ou des autres sources de chaleur,
un deuxième élément (6) attaché à ladite surface inférieure (5) et au moins partiellement inclus dans l'épaisseur dudit premier élément (2), ledit deuxième élément (6) étant constitué d'un deuxième matériau apte à chauffer lorsqu'il est immergé dans le champ magnétique généré par une source d'induction électromagnétique,
un troisième élément (7) attaché à ladite surface supérieure (3) et au moins partiellement compris dans l'épaisseur dudit premier élément (2), ledit troisième élément (7) étant constitué dudit deuxième matériau ou d'un troisième matériau, ledit récipient (1) présentant une zone d'interface (31) disposée sur la surface supérieure (3), dans lequel ledit premier élément (2) et ledit troisième élément (7) sont adjacents,
**caractérisé en ce que**
au moins ladite surface supérieure (3) comprend une couche (8) de matériau résistant à la corrosion, dans lequel ladite couche (8) de matériau résistant à la corrosion est obtenue en appliquant ledit matériau résistant à la corrosion sur la surface supérieure (3) du récipient (1) à l'aide d'une torche à plasma par la technique dite de projection de plasma thermique, c'est-à-dire de projection de plasma en présence d'une atmosphère contrôlée.

2. Récipient selon la revendication 1, dans lequel ledit matériau résistant à la corrosion comprend de l'oxyde d'aluminium ou de l'alumine (A1203).

3. Récipient selon la revendication 1, dans lequel ledit matériau résistant à la corrosion comprend de l'oxyde d'aluminium ou de l'alumine (A1203) avec un faible pourcentage massique d'oxyde de titane (TiO2).

4. Récipient selon la revendication précédente, dans lequel le pourcentage massique d'oxyde de titane (TiO2) ajouté à l'oxyde d'aluminium ou à l'alumine (A1203) peut varier entre 1 % et 5 %, et en particulier il peut être d'environ 3 %.

5. Récipient selon l'une des revendications précédentes, dans lequel ladite couche (8) de matériau résistant à la corrosion s'étend sur au moins une partie de la surface latérale (4).

6. Récipient selon l'une des revendications précédentes, dans lequel ladite couche (8) de matériau résistant à la corrosion comprend une portion (9) d'épaisseur plus faible située près de la zone d'interface (31) entre ledit premier élément (2) et ledit troisième élément (7).

7. Récipient selon la revendication précédente, lorsqu'elle dépend de la revendication 5, dans lequel ladite portion (9) d'épaisseur plus faible est obtenue en déplaçant ladite torche à plasma avec un passage à vitesse plus élevée près de la zone d'interface (31).

8. Récipient selon la revendication 6, dans lequel ladite portion (9) d'épaisseur plus faible est obtenue en enlevant ledit matériau antiadhésif jusqu'à l'obtention de l'épaisseur souhaitée, ledit enlèvement comprenant un usinage mécanique avec enlèvement de copeaux ou un traitement par électro-décharge.

9. Récipient selon l'une des revendications précédentes, dans lequel ladite épaisseur de la couche (8) de matériau résistant à la corrosion est comprise entre 20 µm et 150 µm.

10. Récipient selon l'une des revendications précédentes, dans lequel ledit deuxième matériau et/ou ledit troisième matériau sont de type ferromagnétique, par exemple un acier inoxydable de type AISI 430, ou AISI 410.

11. Récipient selon l'une des revendications précédentes, dans lequel ledit deuxième élément (6) et ledit troisième élément (7) comprennent des ouvertures et/ou des encoches respectives.

12. Procédé de fabrication d'un récipient (1) pour cuire des aliments, du type utilisable sur des sources d'induction électromagnétique, **caractérisé en ce qu'**il inclut les étapes suivantes :
fournir un premier élément (2) constitué d'un premier matériau, comprenant une surface supérieure (3) destinée à accueillir les aliments à cuire, et une surface inférieure (5) pour reposer le récipient (1), ledit premier élément (2) étant déjà formé avec une forme substantiellement semblable à un bol, ou étant formé ultérieurement avec une forme substantiellement semblable à un bol ;
fournir un deuxième élément (6), constitué d'un deuxième matériau apte à chauffer lorsqu'il est immergé dans le champ magnétique généré par une source d'induction électromagnétique ;
fournir un troisième élément (7) constitué dudit deuxième matériau ou d'un troisième matériau ;
attacher ledit deuxième élément (6) à ladite surface inférieure (5), de manière à l'inclure au moins partiellement dans l'épaisseur dudit premier élément (2) ;
attacher ledit troisième élément (7) à ladite surface supérieure (3) du récipient (1), de manière à l'inclure au moins partiellement dans l'épaisseur dudit premier élément (2), ledit récipient (1) présentant une zone d'interface (31) disposée sur la surface supérieure (3), dans laquelle ledit premier élément (2) et ledit troisième élément (7) sont adjacents ;
**caractérisé en ce qu'**il comprend :
appliquer sur ladite surface supérieure (3) du récipient (1) une couche (8) de matériau résistant à la corrosion à l'aide d'une torche à plasma via la technique dite de projection de plasma thermique, c'est-à-dire de projection de plasma en présence d'une atmosphère contrôlée.

13. Procédé selon la revendication précédente, dans lequel ladite étape d'application d'une couche (8) de matériau résistant à la corrosion comprend l'application d'oxyde d'aluminium ou d'alumine (A1203).

14. Procédé selon la revendication 12, dans lequel ladite étape d'application d'une couche (8) de matériau résistant à la corrosion consiste à appliquer de l'oxyde d'aluminium ou de l'alumine (A1203) avec un faible pourcentage massique d'oxyde de titane (TiO2).

15. Procédé selon l'une des revendications 12 à 14, dans lequel ladite étape d'application d'une couche (8) de matériau résistant à la corrosion comprend l'application sur ladite surface supérieure (3) du récipient (1) et sur au moins une partie de la surface latérale (4).

16. Procédé selon l'une des revendications 12 à 15, dans lequel ladite étape d'application d'une couche (8) de matériau résistant à la corrosion consiste à déplacer ladite torche à plasma à une vitesse plus élevée lorsque la torche se trouve sur la zone d'interface (31), de manière à diminuer la quantité de poudre de matériau résistant à la corrosion appliquée, en maintenant constant le débit de poudre de la torche à plasma et en réalisant ainsi une portion (9) d'épaisseur plus faible dans ladite couche (8).

17. Procédé selon l'une des revendications 12 à 15, comprenant l'enlèvement dudit matériau antiadhésif, jusqu'à l'obtention de l'épaisseur désirée, près de ladite zone d'interface (31), réalisant ainsi une portion (9) d'épaisseur plus faible dans ladite couche (8), ledit enlèvement comprenant un usinage mécanique avec enlèvement de copeaux ou un traitement par électro-décharge.

18. Procédé selon l'une des revendications 12 à 17, dans lequel ledit premier élément (2), ledit deuxième élément (6) et ledit troisième élément (7) sont assemblés à l'aide de la technique de collage par impact.

19. Procédé selon l'une des revendications 12 à 18, dans lequel ladite étape d'application d'une couche (8) de matériau résistant à la corrosion est précédée d'une étape de lavage du récipient (1) pour éliminer les impuretés huileuses et les résidus solides et il est soumis à une étape de sablage pour avoir une rugosité de surface adaptée à la réception de ladite couche (8) de matériau résistant à la corrosion.

20. Procédé selon la revendication précédente, dans lequel ladite étape de sablage permet d'obtenir une rugosité de surface comprise entre 1 Ra et 4,5 Ra.
